# EUROPÄISCHE PATENTSCHRIFT

(11) **EP 3 018 542 B1**
(45) Veröffentlichungstag und Bekanntmachung des Hinweises auf die Patenterteilung: **26.12.2018**
(21) Anmeldenummer: 14192066.0
(22) Anmeldetag: 06.11.2014
(51) Int. Cl.: G05B 19/04, G05B 19/418, G05F 1/66

(54) **Automatisierungsanlage mit leistungsreduziertem Pausenbetrieb**
Automation system with power reduced break operation
Installation d'automatisation ayant un mode pause à réduction de puissance

(43) Veröffentlichungstag der Anmeldung: 11.05.2016
(73) Patentinhaber: Siemens Aktiengesellschaft, 80333 München (DE)
(72) Erfinder: Himmler, Matthias, 90425 Nürnberg (DE); Peschke, Jörn, 90489 Nürnberg (DE); Volkmann, Patrick, 90480 Nürnberg (DE)

(56) Entgegenhaltungen:
- "PI White Paper: Assessing PROFIenergy's potential", PROFIBUS Nutzerorganisation e. V. (PNO) , Nr. 1.0 November 2011 (2011-11), XP002739337, Gefunden im Internet: URL:http://www.automation.com/pdf_articles /profinet/PROFIenergy_White_Paper_Nov2011_ e.pdf [gefunden am 2015-05-07]

## Beschreibung

Die Erfindung betrifft ein Verfahren zum Betreiben einer Automatisierungsanlage, um einen Leistungsverbrauch von Anlagenkomponenten der Automatisierungsanlage für eine Betriebspause zu reduzieren. Zu der Erfindung gehören auch eine Automatisierungsanlage, die gemäß dem Verfahren betreibbar ist, sowie eine Steuervorrichtung, mittels welcher ein Betriebszustand der Anlagenkomponenten über ein Datennetzwerk gesteuert werden kann.

Eine Automatisierungsanlage kann beispielsweise dazu vorgesehen sein, einen Herstellungsprozess, beispielsweise die Produktion von Kraftfahrzeugen, mittels Anlagenkomponenten, beispielsweise Robotern, Fließbändern, Lackierungsstationen, vollautomatisiert oder teilautomatisiert durchzuführen. Während des Betriebs einer Automatisierungsanlage kann es gewünscht sein, dass die Anlagenkomponenten ruhen, weil sie beispielsweise aufgrund einer geplanten Mittagspause oder über Nacht nicht von Personal beaufsichtigt werden können. Hierbei ist es von Vorteil, wenn die Anlagenkomponenten während einer solchen Betriebspause einen Energiesparmodus einnehmen, in welchem ihr Leistungsbedarf oder Leistungsverbrauch reduziert ist.

Mit dem Standard PROFIenergy hat der Verband PROFIBUS & PROFINET International (PI) eine standardisierte Datenschnittstelle entwickelt, die auf dem Standard PROFINET basiert. Mit dieser Schnittstelle lässt sich der Energiebedarf von Automatisierungsgeräten durch das Schalten in Energiesparmodi über ein PROFINET-Netzwerk reduzieren. Eine Beschreibung hierzu findet sich in dem Dokument "PI White Paper: Assessing PROFIenergy's Potential", von der PROFIBUS Nutzerorganisation e.V. (PNO), Version 1.0, November 2011.

Aktuell lassen sich PROFIenergy-Geräte nur über Pausenzeiten in energetisch günstige Zustände schalten. Es wird von einer zentralen Steuervorrichtung eine einzelne Pausenzeit ausgesendet, welche die Dauer der Betriebspause angibt. Jedes Gerät empfängt diese Pausenzeit und entscheidet anschließend in der beschriebenen Weise selbständig, in welchen Energiesparzustand (bezeichnet als Energy-Saving-Mode) das Gerät wechselt. Danach übermittelt das Gerät eine Weckzeit zurück an die zentrale Steuervorrichtung, welche als PROFINET State Controller (PSC) bezeichnet wird. Die Weckzeit ist diejenige Zeit, zu welcher das Gerät einen Befehl zum Wiederaufwachen bekommen muss, um zum Pausenende wieder betriebsbereit zu sein.

Für die zentrale Steuervorrichtung ist es dabei nicht möglich festzulegen, in welchem Zustand das Gerät schalten wird. Ein Gerät einer Automatisierungsanlage, oder allgemein eine Anlagenkomponente, wechselt selbsttätig in einen Zielzustand, wenn bestimmte Voraussetzungen erfüllt sind. Der Zielzustand wird von der Anlagenkomponente in Abhängigkeit von den empfangenen Pausenzeitdaten selbst gewählt, das heißt es wird ein bestimmter Zielzustand eingenommen, wenn die empfangenen Pausenzeitdaten eine vorausgesetzte Pausenzeit angeben. Beträgt die Pausenzeit beispielsweise zwischen fünf Minuten und einer Stunde, so kann ein anderer Zielzustand eingenommen werden als für eine Pausenzeit, die in einem Zeitdauerbereich von einer Stunde bis zwölf Stunden liegt.

Eine weitere wichtige Voraussetzung für die Einnahme eines bestimmten Zielzustands ist, dass zumindest eine andere Anlagenkomponente einen jeweiligen vorbestimmten vorausgesetzten Betriebszustand aufweist. Beispielsweise kann eine erste Anlagenkomponente, beispielsweise ein Fließband, nicht einfach anhalten, wenn die erste Anlagenkomponente dazu verwendet wird, Werkstücke von einer anderen Anlagenkomponente, beispielsweise einer Flaschenabfüllanlage, abzutransportieren. Würde das Fließband einfach anhalten, würden sich die Flaschen in der noch in Betrieb befindlichen Flaschenabfüllanlage stauen. Daher kann es sein, dass eine Anlagenkomponente für eine Betriebspause nicht in den leistungsärmsten Zielzustand schaltet, falls eine andere Anlagenkomponente nicht den dazu nötigen für diesen Zielzustand vorausgesetzten Betriebszustand aufweist.

Aus der WO 2013/044964 A1 ist hierzu bekannt, Anlagenkomponenten über eine zentrale Steuervorrichtung zentral zu schalten, sodass die Steuervorrichtung die Zielzustände aller Anlagenkomponenten direkt einstellt. Hierzu nutzt die Steuervorrichtung ein Gesamtmodell der Anlage, das aus einzelnen Zustandsmodellen jeder der Anlagenkomponenten gebildet ist. Nachteilig hierbei ist, dass Steuerbefehle zum Einstellen des Zielzustands von der zentralen Steuervorrichtung zu jeder Anlagenkomponente übertragen werden müssen. Bei einigen Bussystemen zum Steuern von Anlagenkomponenten ist eine solche direkte Steuerung nicht möglich. Ein Beispiel hierfür sind Anlagenkomponenten, die ein PROFIenergy-Gerät aufweisen.

Der Erfindung liegt die Aufgabe zugrunde, bei einer Automatisierungsanlage in einer Betriebspause den Leistungsverbrauch von Anlagenkomponenten der Automatisierungsanlage zu reduzieren.

Die Aufgabe wird durch die Gegenstände der unabhängigen Patentansprüche gelöst. Vorteilhafte Weiterbildungen der Erfindung ergeben sich durch die Merkmale der abhängigen Patentansprüche.

Erfindungsgemäß bereitgestellt ist ein Verfahren zum Betreiben einer Automatisierungsanlage, um einen Leistungsverbrauch von Anlagenkomponenten der Automatisierungsanlage für eine Betriebspause zu reduzieren. Eine Anlagenkomponente kann hierbei in an sich bekannter Weise ein Gerät oder einen Automaten umfassen, beispielsweise ein Fließband oder ein steuerbares Ventil oder allgemein eine Produktionsstation. Ein Automat kann z.B. eine Flaschenabfüllanlage oder ein Flaschenreinigungsanlage sein. Eine Anlagenkomponente kann auch zusätzlich oder alternativ dazu zumindest einen Sensor aufweisen, beispielsweise einen Temperatursensor oder einen Drucksensor oder einen Geschwindigkeitssensor. Mittels des Sensors kann ein von der Automatisierungsanlage durchgeführten Prozess beobachtet werden.

Bei dem Verfahren sendet eine Steuervorrichtung über ein Datennetzwerk zum Einleiten der Betriebspause Pausenzeitdaten an die Anlagenkomponenten aus. Daraufhin wird, wie von dem Standard PROFIenergy bekannt, durch jede Anlagenkomponente selbsttätig in einen Zielzustand gewechselt, falls die empfangenen Pausenzeitdaten eine für den Zielzustand vorausgesetzte Pausenzeit angeben, die also für den Wechsel in den spezifischen Zielzustand vorgesehen ist, und falls zumindest eine andere Anlagenkomponente einen jeweiligen für den Zielzustand vorausgesetzten Betriebszustand aufweist, den also für den Wechsel in den spezifischen Zielzustand die andere Komponente aufweisen muss.

Das erfindungsgemäße Verfahren weist des Weiteren den folgenden Schritt auf. Die Steuervorrichtung sendet als die Pausenzeitdaten an die Anlagenkomponenten nicht eine einzige Pausenzeit, wie es beispielsweise von PROFIenergy bekannt ist. Stattdessen wird an die Anlagenkomponenten jeweils eine komponentenspezifische Pausenzeit ausgesendet, die von zumindest einer an eine andere der Anlagenkomponenten ausgesendeten Pausenzeit verschieden ist. Hierdurch können die Komponentenzustände aufeinander abgestimmt werden.

Durch die Erfindung ergibt sich der Vorteil, dass die Steuervorrichtung durch Aussenden unterschiedlicher Pausenzeiten die Betriebszustände der Anlagenkomponenten derart aufeinander abstimmen kann, dass die Automatisierungsanlage eine gezielt herbeizuführende Zustandskombination der Anlagenkomponenten einnimmt, in welcher die Automatisierungsanlage einen besonders niedrigen, insbesondere den niedrigsten Leistungsverbrauch aufweist. Das erfindungsgemäße Verfahren kann insbesondere im Zusammenhang mit einem PROFINET durchgeführt werden. Insbesondere erfolgt die Steuerung der Anlagenkomponenten konform zum Standard PROFIenergy. Die Steuervorrichtung ist dann insbesondere ein PROFINET State Controller.

Denn das erfindungsgemäße Verfahren ermöglicht in vorteilhafter Weise, ausschließlich durch Aussenden von Pausenzeiten die Betriebszustände der Anlagenkomponente zu synchronisieren oder aufeinander abzustimmen. Jede Anlagenkomponente kann weiterhin selbständig in einen jeweiligen Zielzustand schalten. Dabei kann durch die verschiedenen Pausenzeiten bewirkt werden, dass aus Sicht einer Anlagenkomponente die anderen Anlagenkomponenten einen jeweiligen für einen günstigen Zielzustand vorausgesetzten Betriebszustand aufweisen, sodass eine Anlagenkomponente einen von der Steuervorrichtung festgelegten Betriebsmodus einnehmen kann.

Unter Zielzustand ist insbesondere ein Energiesparzustand zu verstehen. Mit anderen Worten verbraucht die jeweilige Anlagenkomponente in ihrem Zielzustand bevorzugt weniger Leistung als vor der Betriebspause. Mit anderen Worten ist der Zielzustand bevorzugt ein Energiesparmodus. Ein Zielstands kann aber auch in Bezug auf die Erfüllung zumindest eines anderen Betriebskriteriums, z.B. Verschleiß und/oder Reaktionszeit, vorgegeben sein.

Eine Pausenzeit kann im Sinne der Erfindung eine Angabe zu einer Pausendauer und/oder einem Pausenbeginn und/oder ein Pausenende darstellen. Zusätzlich oder alternativ dazu kann eine Pausenzeit auch eine Mindestdauer der Pause angeben oder ein Intervall von Zeitangaben, welcher angibt, in welchem Zeitbereich die bevorstehende Betriebspause liegt.

Eine Weiterbildung des Verfahrens umfasst die folgenden Schritte. Die Steuervorrichtung legt zu einer ersten der Anlagenkomponenten einen Zielzustand fest und ermittelt zu dem festgelegten Zielzustand die vorausgesetzte Pausenzeit und den jeweiligen vorausgesetzten Betriebszustand der zumindest einen anderen Anlagenkomponente. Die Steuervorrichtung steuert dann die zumindest eine andere Anlagenkomponente in den jeweiligen ermittelten vorausgesetzten Betriebszustand. Hierdurch ist es dann in vorteilhafter Weise der ersten Anlagenkomponente möglich, den festgelegten Zielzustand einzunehmen.

Damit sie dies tut, sendet die Steuervorrichtung an die erste Anlagenkomponente mittels der Pausenzeitdaten die ermittelte vorausgesetzte Pausenzeit, durch welche die erste Anlagenkomponente in den festgelegten Zielzustand wechselt. Die zumindest eine andere Anlagenkomponente befindet sich dann bereits in dem ermittelten vorausgesetzten Betriebszustand, sodass die erste Anlagenkomponente nicht am Einnehmen des gewünschten oder festgelegten Zielzustands gehindert ist. Diese Ausführungsform weist den Vorteil auf, dass die Steuervorrichtung bei der ersten Anlagenkomponente gezielt einen gewünschten Zielzustand ansteuern kann, also beispielsweise einen bestimmten Energiesparmodus. Hierbei muss sie dennoch nur eine Pausezeit an die erste Anlagenkomponente aussenden.

Um hierbei die zumindest eine andere Anlagenkomponente in den jeweiligen ermittelten vorausgesetzten Betriebszustand zu steuern, ist eine Weiterbildung zu diesem Verfahrensschritt vorgesehen. Bei dieser Weiterbildung sendet die Steuervorrichtung an die zumindest eine andere Anlagenkomponente eine jeweilige Pausenzeit, durch welche die zumindest eine andere Anlagenkomponente selbsttätig in den jeweiligen ermittelten vorausgesetzten Betriebszustand wechselt. Hierdurch ergibt sich der Vorteil, dass zum Ansteuern des festgelegten Zielzustands bei der ersten Anlagenkomponente ausschließlich das Aussenden von Pausenzeiten über das Datennetzwerk möglich ist. Hierdurch ist eine standardkonforme Kommunikation gemäß PROFIenergy möglich.

Um eine Automatisierungsanlage gemäß dem erfindungsgemäßen Verfahren zu steuern, ist durch die Erfindung eine Steuervorrichtung zum Steuern von Anlagenkomponenten einer Automatisierungsanlage über ein Datennetzwerk bereitgestellt. Die erfindungsgemäße Steuervorrichtung weist eine Anschlusseinrichtung zum Anschließen der Steuervorrichtung an das Datennetzwerk auf. Bevorzugt ist eine Anschlusseinrichtung zum Anschließen an ein PROFINET vorgesehen. Eine mit der Anschlusseinrichtung gekoppelte Prozessoreinrichtung der Steuervorrichtung ist dazu ausgelegt, zum Einleiten einer Betriebspau se der Automatisierungsanlage Pausenzeitdaten über die Anschlusseinrichtung an die Anlagenkomponenten in das Datennetzwerk auszusenden. Die Prozessoreinrichtung ist dabei in der beschriebenen Weise dazu ausgelegt, zum Einleiten der Betriebspause als die Pausenzeitdaten an die Anlagenkomponenten eine jeweilige komponentenspezifische Pausenzeit, die von zumindest einer an eine andere der Anlagenkomponenten ausgesendeten Pausenzeit verschieden ist, auszusenden.

Die erfindungsgemäße Steuervorrichtung weist den Vorteil auf, dass durch Aussenden der verschiedenen Pausenzeiten die Anlagenkomponenten in Bezug auf die von ihnen eingenommenen Zielzustände derart aufeinander abgestimmt werden können, dass gezielt eine Zustandskombination der Anlagenkomponenten angesteuert werden kann, durch welche ein vorbestimmtes Betriebskriterium erfüllt ist. Insbesondere ergibt sich ein besonders geringer Leistungsverbrauch in der Betriebspause.

Die Prozessoreinrichtung kann beispielsweise einen Mikrokontroller oder eine CPU (Central Processing Unit) aufweisen und beispielsweise ein Betriebsprogramm oder Steuerprogramm der Steuervorrichtung ausführen. Die Steuervorrichtung ist bevorzugt als SPS (speicherprogrammierbare Steuerung) ausgelegt.

In einer Weiterbildung der Erfindung ist die Prozessoreinrichtung dazu ausgelegt, die komponentenspezifischen Pausenzeiten zu unterschiedlichen Zeitpunkten auszusenden und eine Wartedauer zwischen dem jeweiligen Aussenden zweier Pausenzeiten in Abhängigkeit von Übergangszeitdaten, welche eine jeweilige Zustandswechseldauer in den jeweiligen Zielzustand der Anlagenkomponenten angeben, festzulegen oder einzustellen. Hierdurch ergibt sich der Vorteil, dass die Anlagenkomponenten mittels der zeitversetzt ausgesendeten Pausenzeiten in einer festgelegten Schaltreihenfolge in ihren jeweiligen Zielzustand gesteuert werden. Hierdurch ist in vorteilhafter Weise sichergestellt, dass eine erste Anlagenkomponente in einen Zielzustand wechseln kann, weil zuvor eine andere Anlagenkomponente bereits denjenigen Betriebszustand erfolgreich eingenommen hat, der Voraussetzung dafür ist, dass die erste Anlagenkomponente den für sie festgelegten Zielzustand einnimmt.

In einer Weiterbildung ist die Prozessoreinrichtung dazu ausgelegt, von den Anlagenkomponenten jeweils Beschreibungsdaten, die zumindest einen in der Anlagenkomponente bereitgestellten Zielzustand und eine jeweilige für den bereitgestellten Zielzustand vorausgesetzte Pausenzeit beschreiben, über das Datennetzwerk abzufragen. Insbesondere nutzt die Prozessoreinrichtung hierzu den PROFIenergy-Befehl "Que-ry_Modes". Auf der Grundlage der Beschreibungsdaten erzeugt die Prozessoreinrichtung ein jeweiliges Zustandsmodell jeder der Anlagenkomponenten. Mit anderen Worten empfängt die Prozessoreinrichtung Beschreibungsdaten, die ein Zustandsmodell der jeweiligen Anlagenkomponente beschreiben. Das Zustandsmodell kann eine Liste der Energy-Saving-Modes oder Energiesparmodi sein. Das Zustandsmodell kann des Weiteren Zeitattribute aufweisen, welche beispielsweise zu jedem Zielzustand angeben, für welches Pausenzeit-Intervall dieser Zielzustand vorgesehen ist, und/oder eine minimale Pausendauer, die durch die Pausenzeiten angegeben sein muss, damit der Zielzustand eingenommen werden kann. Diese Zeitattribute legen die für den jeweiligen Zielzustand vorausgesetzte Pausenzeit fest. Optional können die Beschreibungsdaten und/oder das Zustandsmodell Energieattribute aufweisen, welche beispielsweise einen Leistungsverbrauch der Anlagenkomponente in dem jeweiligen Zielzustand beschreibt.

Durch Erzeugen der Zustandsmodelle in der Prozessoreinrichtung ergibt sich der Vorteil, dass in der Prozessoreinrichtung mittels des jeweiligen Zustandsmodells jeder Anlagenkomponente und der in den Zustandsmodellen angegebenen vorausgesetzten Pausenzeiten für die Zielzustände in Bezug auf den Leistungsverbrauch in der Betriebspause eine Zustandskombination ermittelt werden kann, bei welcher der Leistungsverbrauch ein vorbestimmtes Verbrauchskriterium erfüllt, z.B. einen Verbrauch unter einem Schwellenwert oder einen minimalen Verbrauch.

Hierzu sieht eine Weiterbildung vor, dass die Prozessoreinrichtung dazu ausgelegt ist, auf der Grundlage der Zustandsmodelle eine jeweilige, einem Zielzustand eine vorausgesetzte Pausenzeitdauer zuordnende Zuordnungsvorschrift zu erzeugen. Beispielsweise kann so eine Pausendauer von 60 Sekunden als Parameter für den Zustand Energy-Saving-Mode-2 festgelegt sein. Hierdurch ergibt sich der Vorteil, dass bei Festlegen eines Zustands in einer der Anlagenkomponenten in der Prozessoreinrichtung durch die Zuordnungsvorschrift unmittelbar die auszusendende Pausenzeit bereitsteht. Bevorzugt ist die umgekehrte Zuordnung Zeit zu Zielzustand ebenfalls durch die Zuordnungsvorschrift vorgesehen.

In einer Weiterbildung ist die Prozessoreinrichtung dazu ausgelegt, die Zustandsmodelle auf der Grundlage von Abhängigkeitsdaten zu einem komponentenübergreifenden Gesamtmodell zu verbinden. Die Abhängigkeitsdaten beschreiben zu zumindest einem bereitgestellten Zielzustand in zumindest einem Zustandsmodells einen jeweiligen für diesen Zielzustand vorausgesetzten Betriebszustand zumindest einer anderen der Anlagenkomponente. Die Prozessoreinrichtung generiert also aus den Beschreibungsdaten ein jeweiliges Zustandsmodell jeder Anlagenkomponente und daraus wiederum mit den Abhängigkeitsdaten das geräteübergreifende oder komponentenübergreifende Gesamtmodell. Hierdurch ergibt sich der Vorteil, dass die günstigste Zustandskombination für die Anlagenkomponenten auf der Grundlage eines Optimierungsalgorithmus ermittelt werden kann.

Entsprechend ist in einer Weiterbildung die Prozessoreinrichtung dazu ausgelegt, auf der Grundlage des Gesamtmodells für die Betriebspause eine einen Energieverbrauch der Automatisierungsanlage minimierende Zustandskombination der Zielzustände der Anlagenkomponenten zu ermitteln. Beispielsweise kann ein Graphenmodell genutzt werden. Es können mehrere Schaltpfade, die das Wechseln der Anlagenkomponente in jeweilige Zielzustände beschreiben, und anschließend ein jeweiliger Leistungsverbrauch für jeden Schaltpfad ermittelt werden und der optimale Schaltpfad, der zum geringsten Leistungsverbrauch führt, ausgesucht werden.

Bevorzugt werden die Abhängigkeitsdaten ebenfalls als Bestandteil der Beschreibungsdaten von den Anlagenkomponenten empfangen. Dies ist aber nicht immer möglich, beispielsweise nicht bei Geräten, die PROFIenergy-konform betrieben werden. Hierzu sieht eine Weiterbildung eine Bedienschnittstelle vor, welche zum Empfangen der Abhängigkeitsdaten von einem Benutzer der Automatisierungsanlage ausgelegt ist. Hierdurch ergibt sich der Vorteil, dass beim Konfigurieren oder Projektieren der Automatisierungsanlage die Abhängigkeitsdaten manuell eingegeben werden können oder mittels beispielsweise einer Datendatei in der Steuervorrichtung eingespeist werden können.

In einer Ausführungsform ist die Prozessoreinrichtung dazu ausgelegt, auf der Grundlage des Gesamtmodells einen Schaltpfad oder eine Schaltreihenfolge, in welcher die Anlagenkomponenten in einen jeweiligen festgelegten Zielzustand zu steuern und/oder wieder betriebsbereit zu schalten (zu wecken) sind, zu ermitteln und in Abhängigkeit von der ermittelten Schaltreihenfolge die Pausenzeitdaten und/oder einen jeweiligen Weckbefehl zu erzeugen. In Abhängigkeit von der Schaltreihenfolge kann also beispielsweise für jede Anlagenkomponente eine Pausenzeit und/oder ein Aussendezeitpunkt zum Aussenden der jeweiligen Pausenzeit ermittelt werden. In Abhängigkeit von der Schaltreihenfolge kann zusätzlich oder alternativ ein Aussendezeitpunkt für einen jeweiligen Weckbefehl der Anlagenkomponenten ermittelt werden. Durch die Schaltreihenfolge können die Anlagenkomponenten in Bezug auf die Einleitung der Betriebspause und/oder das Beenden der Betriebspause miteinander synchronisiert oder koordiniert werden.

In einer Ausführungsform ist die Prozessoreinrichtung dazu ausgelegt, einen jeweiligen aktuellen Betriebszustand von den Anlagenkomponenten zu empfangen und jeweils in dem Gesamtmodell als Ausgangszustand abzuspeichern. Des Weiteren ist die Prozessoreinrichtung hierbei dazu ausgelegt, die Pausenzeitdaten in Abhängigkeit von den aktuellen Ausgangszuständen zu ermitteln. Hierdurch wird eine Aktualisierung des Gesamtmodells zur Laufzeit realisiert. Beim Festlegen der jeweiligen komponentenspezifischen Pausenzeit für jede Anlagenkomponente ist so der Ausgangszustand bekannt, aus welchem heraus in die bereitgestellten Zielzustände gewechselt werden kann.

Zu der Erfindung gehört auch eine Automatisierungsanlage zum Durchführen eines Prozesses. Eine Automatisierungsanlage im Sinne der Erfindung ist insbesondere eine Anordnung zumindest von Anlagenkomponenten, die zum Durchführen eines Prozesses ausgestaltet ist. Bei dem Prozess kann es sich beispielsweise um einen Herstellungsprozess zum Herstellen von Produkten wie beispielsweise Kraftfahrzeugen, einen Verfahrensprozess zum Durchführen eines Verfahrens, beispielsweise einer Energiegewinnung von elektrischer Energie aus Kernkraft oder der Klärung von Abwasser, oder einen Steuerprozess, beispielsweise eine Ampelsteuerung in einem Straßenverkehrsnetz, handeln.

Die erfindungsgemäße Automatisierungsanlage weist mehrere Anlagenkomponenten auf, die jeweils zum Steuern und/oder Beobachten (z.B. durch Messen) zumindest eines Teils des Prozesses ausgelegt sind. Des Weiteren ist eine mit den Anlagenkomponenten über ein Datennetzwerk gekoppelte Steuervorrichtung zum Steuern der Anlagenkomponenten bereitgestellt. Erfindungsgemäß ist die Steuervorrichtung eine Ausführungsform der erfindungsgemäßen Steuervorrichtung, und die Automatisierungsanlage ist dazu ausgelegt, eine Ausführungsform des erfindungsgemäßen Verfahrens durchzuführen.

In bevorzugter Ausführungsform sind Anlagenkomponenten jeweils durch ein PROFIenergy-Gerät gemäß dem PROFIenergy-Standard bereitgestellt. Hierdurch ergibt sich der Vorteil, dass bereits bewährte Energiesparzustände als Zielzustände bereitgestellt sind, die mittels des erfindungsgemäßen Verfahrens bei der erfindungsgemäßen Automatisierungsanlage ohne Abänderung des Kommunikationsverhaltens angesteuert werden können.

Im Folgenden ist ein Ausführungsbeispiel der Erfindung beschrieben. Hierzu zeigt:
- FIG 1: eine schematische Darstellung einer Ausführungsform der erfindungsgemäßen Automatisierungsanlage,
- FIG 2: eine Skizze zu einem Zustandsmodell, das von eine Steuervorrichtung der Automatisierungsanlage von einer Anlagenkomponente erzeugt worden sein kann,
- FIG 3: eine Skizze zu einem Gesamtmodell, das aus Zustandsmodellen mehrerer Anlagenkomponenten gebildet sein kann, und
- FIG 4: eine schematische Darstellung einer Bedienschnittstelle zum Eingeben von Abhängigkeitsdaten zwischen den Anlagenkomponenten.

Bei dem im Folgenden erläuterten Ausführungsbeispiel handelt es sich um eine bevorzugte Ausführungsform der Erfindung. Bei dem Ausführungsbeispiel stellen aber die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

In den Figuren sind funktionsgleiche Elemente jeweils mit denselben Bezugszeichen versehen.

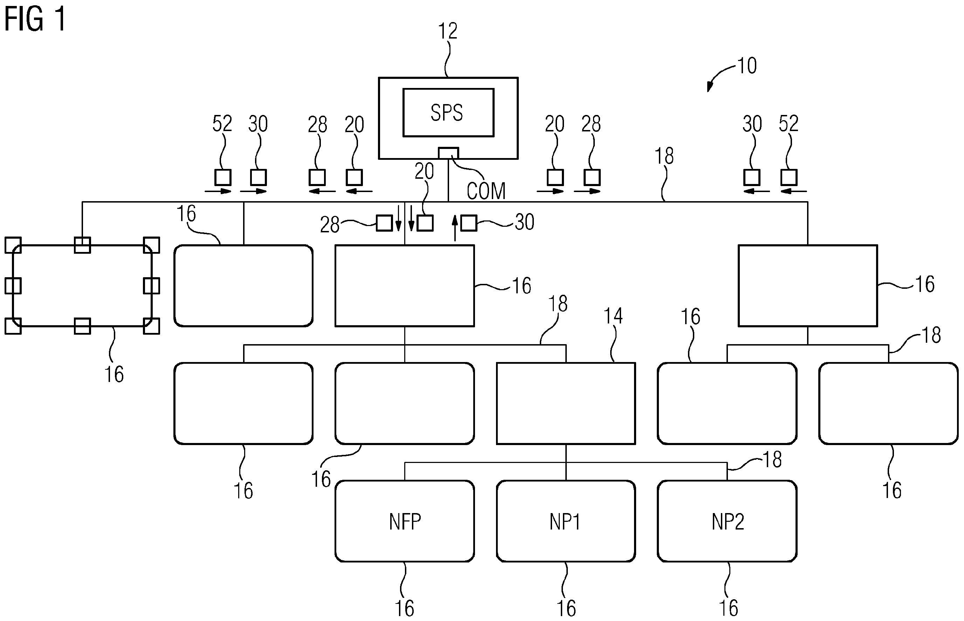

FIG 1 zeigt eine Automatisierungsanlage oder kurz Anlage 10, bei der es sich beispielsweise um eine Flaschenabfüllanlage handeln kann. Die Anlage 10 kann eine zentrale Steuervorrichtung 12 und Anlagenkomponenten 14, 16 aufweisen.

Bei den Anlagenkomponenten 14, 16 kann es sich beispielsweise jeweils um einen Flaschenabfüllautomaten, ein Fließband, eine Flaschenreinigungsstation, eine Entdeckelungsstation, eine Lager-Einlagerkommissionierung oder ein Transportsystem zum Abtransportieren der befüllten Flaschen handeln.

Die Steuervorrichtung 12 kann eine Prozessoreinrichtung SPS aufweisen, die z.B. eine speicherprogrammierbare Steuerung sein und ein Betriebsprogramm der Steuervorrichtung 12 ausführen kann. Insbesondere kann die Steuervorrichtung 12 ein PROFIenergy State Controller, PSC, sein.

Die Anlagenkomponenten 14, 16 können mit der Steuervorrichtung 12 direkt oder indirekt über ein Datennetzwerk 18 in an sich bekannter Weise gekoppelt sein. Das Datennetzwerk 18 kann insbesondere ein PROFINET-Bus sein.

Die Steuervorrichtung 12 kann dazu ausgelegt sein, Betriebszustände der Anlagenkomponenten 14, 16 einzustellen, um bei der Anlage 10 von einem Normalbetrieb, in welchem die Anlage 10 einen Prozess, beispielsweise das Abfüllen von Getränkeflaschen, steuert, in eine Betriebspause, in welcher der Prozess, z.B. das Abfüllen, unterbrochen ist, und/oder von der Betriebspause zurück in den Normalbetrieb zu steuern. Die Steuervorrichtung 12 kann über eine Anschlusseinrichtung COM, z.B. einen Busankoppler, mit dem Datennetzwerk 18 gekoppelt sein.

Die Steuervorrichtung 12 kann hierbei dazu ausgelegt sein, die Betriebszustände nicht direkt durch Zustandswechselbefehle in den Anlagenkomponenten 14, 16 einzustellen, sondern den Anlagenkomponenten 14, 16 jeweilige, komponentenspezifische Pausenzeiten 22 als Pausenzeitdaten über das Datennetzwerk 18 zu übermitteln.

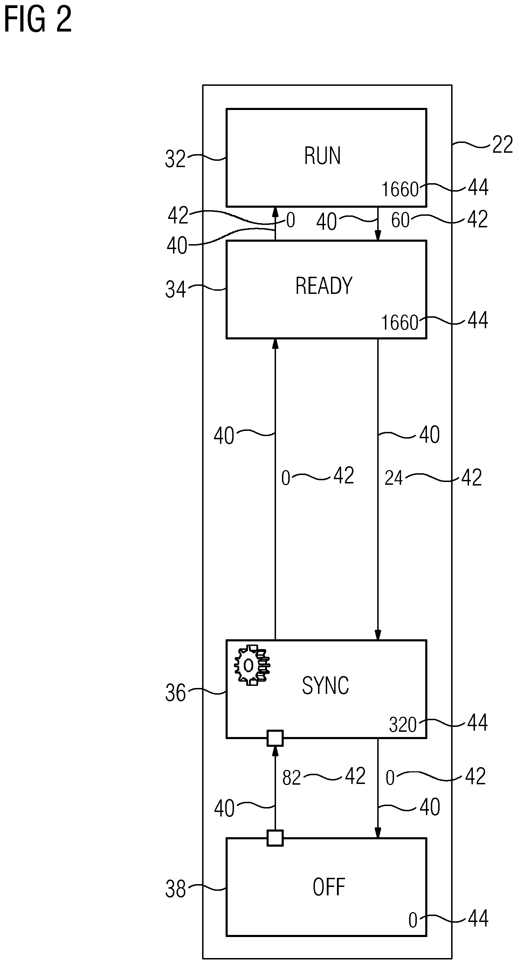

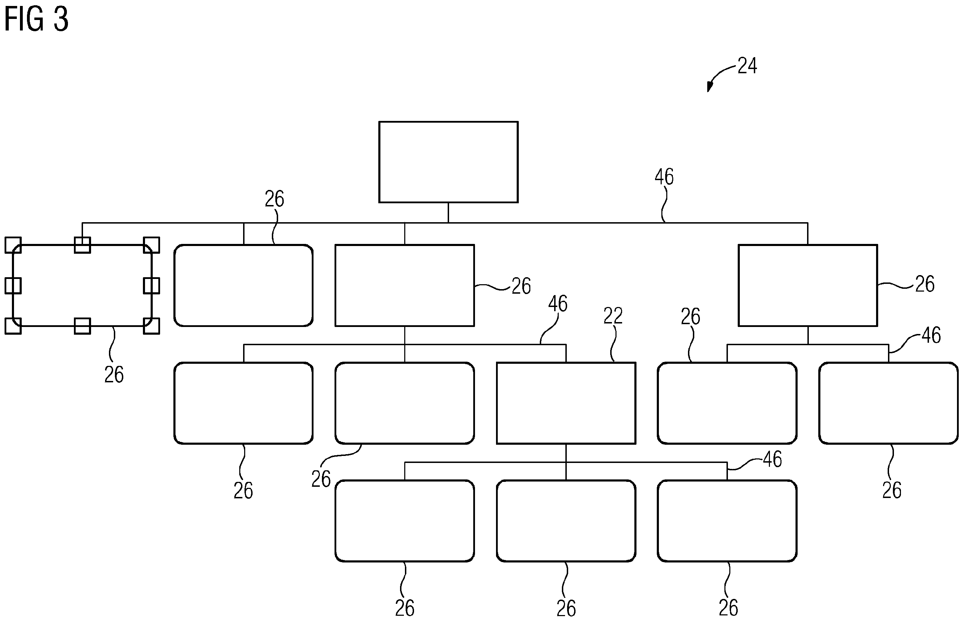

Da es innerhalb der Anlage 10 Abhängigkeiten zwischen den Anlagenkomponenten 14, 16 geben kann und dadurch komplexe Schaltreihenfolgen beim Einstellen des jeweiligen Zielzustands jeder Anlagenkomponente 14, 16 notwendig sein können, können bei der Anlage 10 durch die Steuervorrichtung 12 die Anlagenkomponenten 14, 16 jeweils mit anderen Anlagenkomponenten 14, 16 synchronisiert werden. Hierzu kann bei der Steuervorrichtung 12 vorgesehen sein, dass die Anlagenkomponenten 14, 16 PROFIenergy-Geräte umfassen und zu deren Synchronisation die Steuervorrichtung 12 jeweilige Zustandsmodelle für die Anlagenkomponenten 14, 16 ermittelt und in jeder Anlagenkomponente 14, 16 den Zielzustand gezielt auf der Grundlage des jeweiligen Zustandsmodells ansteuern kann. Zur Erläuterung dieser Steuerung der Anlagenkomponenten 14, 16 durch die Steuervorrichtung 12 auf Grundlage von Zustandsmodellen ist in FIG 2 ein Zustandsmodell 22 beispielsweise der Anlagenkomponente 14 veranschaulicht und in FIG 3 ein Gesamtzustandsmodell oder Gesamtmodell 24 der Anlage 10, das auf Grundlage des Zustandsmodells 22 der Komponente 14 und jeweiligen Zustandsmodellen 26 von der Steuervorrichtung 12 gebildet worden sein kann.

Da die Anlage 10 aus sehr vielen Anlagenkomponenten 14, 16 bestehen kann, kann bei der Anlage 10 der Engineeringaufwand für die Umsetzung der beschriebenen Controller-Funktionalität dadurch reduziert sein, dass die Steuervorrichtung 12 dazu ausgelegt ist, die Zustandsmodelle 22, 26 der Anlagenkomponenten 14, 16, insbesondere wenn diese PROFIenergy-Geräte sind, selbsttätig abzufragen. Des Weiteren kann das beschriebene Verhalten der Steuervorrichtung 12 durch die Übernahme der Geräteinformation, das heißt der Zustandsmodelle 22, 26, in das gerätübergreifende Zustandsmodell 24 automatisiert erzeugt werden.

Die Steuervorrichtung 12 kann dazu ausgelegt sein, in der Anlage 10 die Zustandsmodelle 22, 26 der einzelnen Anlagenkomponenten 14, 16 automatisch und selbständig abzufragen, um daraus dynamisch das geräteübergreifende Zustandsmodell 24 zu erzeugen. Die Vorrichtung 12 kann hierzu den durch die PROFIBUS & PROFINET International genormten PROFIenergy-Befehl "Query_Mode" nutzen, der an jede Anlagenkomponente 14, 16 einzeln als Anfragenachricht 28 über das Datennetzwerk 18 ausgesendet werden kann. Die Steuervorrichtung 12 kann dann von jeder Anlagenkomponente 14, 16 Beschreibungsdaten 30 empfangen, die beispielsweise jeweils eine Liste der Energy-Saving-Modes gemäß PROFIenergy bevorzugt inklusive deren Zeit- und Energieattributen zurückgesendet bekommt.

Die Zeitattribute eines Energy-Saving-Modes beschreiben das Pausenzeit-Intervall, innerhalb dessen ein PROFIenergy-Gerät diesen Zustand einnehmen wird. Für eine kürzere Betriebspause oder eine längere Betriebspause wird das PROFIenergy-Gerät einen anderen Zielzustand einzunehmen versuchen. Basierend auf diesem Zeitintervall für jeden Energy-Saving-Mode einer Anlagenkomponente 14, 16 kann die Steuervorrichtung 12 bestimmen, nach welcher minimalen Pausendauer eine jeweilige Anlagenkomponente in welchen Zielzustand schalten wird.

Fragt man diese Informationen für alle Zielzustände ab, kann das jeweilige Zustandsmodell 22, 26, mit Ausnahme von Abhängigkeiten zwischen den Anlagenkomponenten 14, 16, aufgebaut werden. Es müssen nicht immer alle Attribute vorhanden sein. Beispielsweise kann der Energiebedarf für einen Übergang oder minimale Verweildauer in einem Zustand zählen.

Basierend auf diesen Informationen generiert die Steuervorrichtung 12 für jede Anlagenkomponente 14, 16 ein Zustandsmodell 22, 26 und anschließend aus allen Zustandsmodellen 22, 26 ein geräteübergreifendes Gesamtmodell 24. Mittels des geräteübergreifenden Gesamtmodells 24 kann die Steuervorrichtung 12 die Anlagenkomponenten 14, 16 untereinander synchronisieren und den einzelnen Anlagenkomponenten 14, 16 spezifisehe Pausendauern, oder allgemein Pausenzeiten, 20 übermitteln, um diese Anlagenkomponenten 14, 16 gezielt Zielzustände einnehmen zu lassen.

FIG 2 veranschaulicht das Zustandsmodell 22 der Anlagenkomponente 14 beispielhaft. Das Zustandsmodell 22 kann beispielhaft zwei Aktivzustände 32, 34 und zwei Energiesparzustände 36, 38 aufweisen. Insbesondere die Energiesparzustände 36, 38 stellen Zielzustände im Sinne der Erfindung dar. Der Aktivzustand 32 kann der Normalbetriebszustand (RUN) sein. Der Aktivzustand 34 kann ein Bereitschaftszustand sein (READY). Der Energiesparzustand 36 kann ein Synchronisationszustand (SYNC) sein, wie er aus PROFINET bekannt ist und weiterhin eine Kommunikation der Anlagenkomponente 14 mit weiteren Anlagenkomponenten 16 vorsieht. Der Energiesparmodus 38 kann ein abgeschalteter Zustand sein (OFF), in welchem die Anlagenkomponente 14 nicht mehr mit anderen Anlagenkomponenten 16 kommuniziert.

Das Zustandsmodell 22 kann für die Zustandswechsel 40 eine jeweilige Übergangsdauer 42 angeben. Beispielsweise können die Übergangsdauern 42, wie sie in FIG 2 dargestellt sind, Angaben in Sekunden sein, welche benötigt werden, um den jeweiligen Zustandswechsel 40 durchzuführen. Für jeden Aktivzustand und/oder jeden Zielzustand 36, 38 kann jeweils ein Leistungsbedarf 44 in dem Zustandsmodell 22 gespeichert sein. Die in FIG 2 angegebenen Zahlen können beispielsweise Angaben in Watt sein.

In FIG 3 ist beispielhaft für die Anlage 10 das Gesamtmodell 24 gezeigt, in welchem Abhängigkeiten 46 zwischen beliebigen Anlagenkomponenten 14, 16 der Anlage 10 berücksichtigt sind. Die Abhängigkeiten 46 betreffen in der beschriebenen Weise vorausgesetzte Betriebszustände.

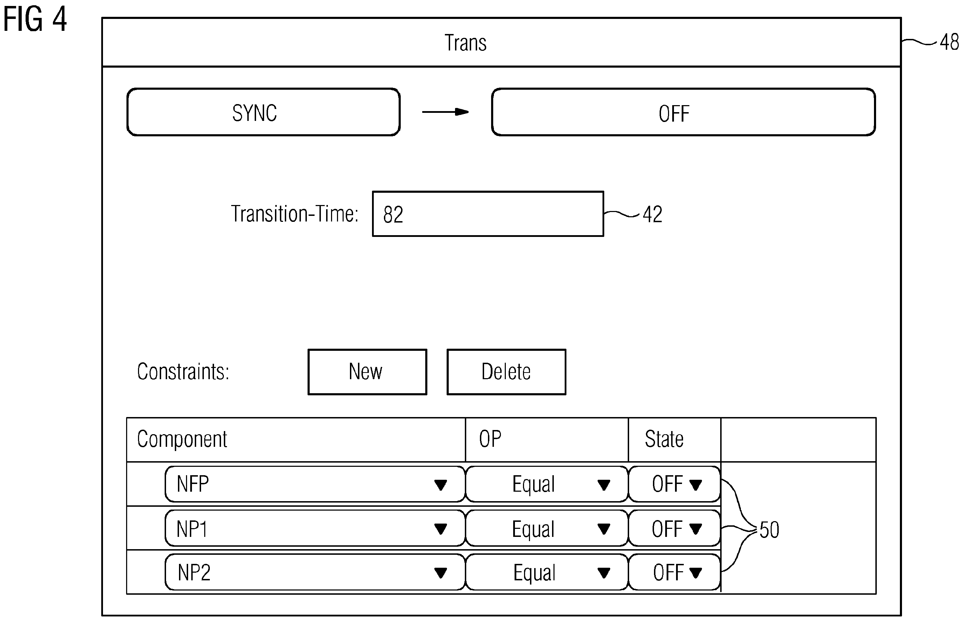

Zum Festlegen der Abhängigkeiten 46 kann die Steuervorrichtung 12 beispielsweise eine in FIG 4 dargestellte Bedienschnittstelle 48 aufweisen, mittels welcher beispielsweise ein Entwicklungsingenieur die Steuervorrichtung 12 projektieren kann, um die Abhängigkeiten 46 für die Zustandsübergänge 40 (Trans) festzulegen. Beispielhaft ist in FIG 4 für die Anlagenkomponente 14, das heißt deren Zustandsmodell 22, gezeigt, wie die Abhängigkeiten eines bestimmten Übergangs, hier vom Energiesparzustand SYNC in den Energiesparzustand OFF festgelegt werden können. In diesem Fall gibt es drei Übergangsbedingungen (Constraints), die jeweils durch eine Angabe beschrieben werden:
1. Anlagenkomponenten (Component), auf die sich die Abhängigkeit bezieht (hier zum Beispiel die Anlagenkomponenten NFP, NP1, NP2 (siehe FIG 1)),
2. ein jeweiliger Operator (OP), der entweder beispielsweise gleich (Equal) oder ungleich (NotEqual) fordern kann,
3. der Ausgangszustand 50 (State), auf den sich die Aussage bezieht.

Zudem kann beispielsweise über die Bedienschnittstelle 48 die Übergangszeit (Transission-Time 42) festgelegt werden. Weitere Bedingungen können mit der Bedienfläche "New" hinzugefügt und überflüssige Bedingungen mit der Bedienfläche "Delete" gelöscht werden.

In dem in FIG 4 gezeigten Beispiel bedeutet die erste Zeile, dass die Anlagenkomponente NFP Equal OFF, also dass die Anlagenkomponente NFP im Zustand OFF sein muss.

Die gesamte beschriebene Abhängigkeit bedeutet, dass die Anlagenkomponente 14 nur von SYNC in den Zielzustand OFF geschaltet werden darf, wenn die Komponenten NFP, NP1, NP2 bereits im Zustand OFF sind, sie müssen also ausgeschaltet sein.

An den Zustandsübergängen 40 werden die benötigten Übergangszeiten 42 bevorzugt mitgespeichert, womit sich das Schaltverhalten einer Anlagenkomponente 14, 16 berechnen lässt. Abhängigkeiten zwischen den Anlagenkomponenten 14, 16 werden in Form von Transitionsbedingungen formuliert, die sich auf aktuelle Betriebszustände anderer Anlagenkomponenten 14, 16 beziehen. Im Beispiel wird damit ein Verhalten beschrieben, in dem die Anlagenkomponente 14 erst in den OFF-Zustand geschaltet werden kann, wenn drei andere Anlagenkomponenten 16 (hier NFP, NP1, NP2) ausgeschaltet sind. Abhängigkeiten dieser Art lassen sich sehr einfach aus dem gegebenen Zustandsraum und möglichen oder verbotenen Zustandskombinationen der beteiligten Geräte ableiten. Diese können dann mittels der Bedienschnittstelle 48 eingegeben werden.

Durch die Steuervorrichtung 12 ergeben sich die folgenden Vorteile. Es erfolgt eine komplett automatische Erzeugung des Gesamtmodells 24. Die Aktualisierung des Gesamtmodells 24 kann zur Laufzeit erfolgen, indem die Anlagenkomponenten 14, 16 ihren jeweiligen aktuellen Betriebszustand 52 an die Steuervorrichtung 12 senden, welche diese in dem Gesamtmodell 24 speichert. Auf der Grundlage des Gesamtmodells 24 ergibt sich für die Steuervorrichtung 12 die Möglichkeit, gezielt eine Zustandskombination von Betriebszuständen der Anlagenkomponenten 14, 16 zu ermitteln, in welcher die Anlagenkomponenten 14, 16 insgesamt einen geringen Leistungsverbrauch in einer vorgegebenen Betriebspause aufweisen.

Durch diese automatische und dynamische Erzeugung von Zustandsmodellen in einer zentralen Steuervorrichtung 12 können insbesondere PROFIenergy-Geräte anlagenweit gezielt in gewünschte Energiesparzustände versetzt werden und dabei auch untereinander synchronisiert werden.

Durch die komplett automatische Erzeugung des Gesamtmodells 24 wird der Engineeringaufwand, d.h. der Planungsaufwand, für die Umsetzung der Controllerfunktionalität deutlich reduziert.

Insgesamt zeigt das Beispiel, wie durch die Erfindung ein PROFIenergy-State-Controller bereitgestellt werden kann.

### Bezugszeichenliste

- 10: Anlage
- 12: zentrale Steuervorrichtung
- 14, 16: Anlagenkomponente
- 18: Datennetzwerk
- 20: Pausenzeit
- 22: Zustandsmodell
- 24: Gesamtmodell
- 26: Zustandsmodell
- 28: Anfragenachricht
- 30: Beschreibungsdaten
- 32, 34: Aktivzustand
- 36, 38: Energiesparzustand
- 40: Zustandsübergang
- 42: Übergangsdauer
- 44: Leistungsverbrauch
- 46: Abhängigkeit
- 48: Bedienschnittstelle
- 50: Ausgangszustand
- 52: aktueller Zustand
- COM: Anschlusseinrichtung
- SPS: Prozessoreinrichtung

## Patentansprüche

1. Verfahren zum Betreiben einer Automatisierungsanlage (10), um einen Leistungsverbrauch von Anlagenkomponenten (14, 16) der Automatisierungsanlage (10) für eine Betriebspause zu reduzieren,
mit den Schritten:
- eine Steuervorrichtung (12) sendet über ein Datennetzwerk (18) zum Einleiten der Betriebspause Pausenzeitdaten an die Anlagenkomponenten (14, 16) aus,
- jede Anlagenkomponente (14, 16) wechselt selbsttätig in einen Zielzustand (32, 34, 36, 38), falls die empfangenen Pausenzeitdaten eine für den Zielzustand (32, 34, 36, 38) vorausgesetzte Pausenzeit angeben und falls zumindest eine andere Anlagenkomponente (14, 16) einen jeweiligen für den Zielzustand (32, 34, 36, 38) vorausgesetzten Betriebszustand (50) aufweist,
- die Steuervorrichtung (12) sendet als die Pausenzeitdaten an die Anlagenkomponenten (14, 16) jeweils eine komponentenspezifische Pausenzeit (20), die von zumindest einer an eine andere der Anlagenkomponenten (14, 16) ausgesendeten Pausenzeit (20) verschieden ist,
**gekennzeichnet durch** die Schritte:
- die Steuervorrichtung (12) legt zu einer ersten der Anlagenkomponenten (14) einen Zielzustand (38) fest und ermittelt zu dem festgelegten Zielzustand (38) die vorausgesetzte Pausenzeit und den jeweiligen vorausgesetzten Betriebszustand (50) der zumindest einen anderen Anlagenkomponente (16),
- die Steuervorrichtung (12) steuert die zumindest eine andere Anlagenkomponente (16) in den jeweiligen ermittelten vorausgesetzten Betriebszustand (50),
- die Steuervorrichtung (12) sendet an die erste Anlagenkomponente (14) die ermittelte vorausgesetzte Pausenzeit (20), durch welche die erste Anlagenkomponente (14) in den festgelegten Zielzustand (38) wechselt.

2. Verfahren nach Anspruch 1, **gekennzeichnet durch** den Schritt:
- um die zumindest eine andere Anlagenkomponente (16) in den jeweiligen ermittelten vorausgesetzten Betriebszustand (50) zu steuern, sendet die Steuervorrichtung (12) an die zumindest eine andere Anlagenkomponente (16) eine jeweilige Pausenzeit (20), durch welche die zumindest eine andere Anlagenkomponente (16) selbsttätig in den jeweiligen ermittelten vorausgesetzten Betriebszustand (50) wechselt.

3. Verfahren nach Anspruch 1 oder 2,
**dadurch gekennzeichnet, dass**
zumindest die erste Anlagenkomponente (14) in ihrem Zielzustand (38) weniger Leistung verbraucht als vor der Betriebspause.

4. Steuervorrichtung (12) zum Steuern von Anlagenkomponenten (14, 16) einer Automatisierungsanlage (10) über ein Datennetzwerk (18), aufweisend:
- eine Anschlusseinrichtung (COM) zum Anschließen der Steuervorrichtung (12) an das Datennetzwerk (18),
- eine mit der Anschlusseinrichtung (COM) gekoppelte Prozessoreinrichtung (CPU), die dazu ausgelegt ist, zum Einleiten einer Betriebspause der Automatisierungsanlage (10) Pausenzeitdaten über die Anschlusseinrichtung (COM) in das Datennetzwerk (18) an die Anlagenkomponenten (14, 16) auszusenden, wobei
die Prozessoreinrichtung (CPU) dazu ausgelegt ist, zum Einleiten der Betriebspause als die Pausenzeitdaten an die Anlagenkomponenten (14, 16) eine jeweilige komponentenspezifische Pausenzeit (20), die von zumindest einer an eine andere der Anlagenkomponenten (14, 16) ausgesendeten Pausenzeit (20) verschieden ist, auszusenden
**dadurch gekennzeichnet, dass**
die Prozessoreinrichtung (CPU) dazu ausgelegt ist, zu einer ersten der Anlagenkomponenten (14) einen Zielzustand (38) festzulegen und zu dem festgelegten Zielzustand (38) die vorausgesetzte Pausenzeit und den jeweiligen vorausgesetzten Betriebszustand (50) der zumindest einen anderen Anlagenkomponente (16) zu ermitteln,
- die Prozessoreinrichtung (CPU) dazu ausgelegt ist, die zumindest eine andere Anlagenkomponente (16) in den jeweiligen ermittelten vorausgesetzten Betriebszustand (50) zu steuern, und
- die Prozessoreinrichtung (CPU) dazu ausgelegt ist, an die erste Anlagenkomponente (14) die ermittelte vorausgesetzte Pausenzeit (20) zu senden, durch welche die erste Anlagenkomponente (14) in den festgelegten Zielzustand (38) wechselt.

5. Steuervorrichtung (12) nach Anspruch 4,
**dadurch gekennzeichnet, dass**
die Prozessoreinrichtung (CPU) dazu ausgelegt ist, die komponentenspezifischen Pausenzeiten (20) zu unterschiedlichen Zeitpunkten auszusenden und eine Wartedauer zwischen dem jeweiligen Aussenden zweier Pausenzeiten (20) in Abhängigkeit von Übergangszeitdaten, welche eine jeweilige Übergangsdauer (42) in den jeweiligen Zielzustand (32, 34, 36, 38) der Anlagenkomponenten (14, 16) angeben, festzulegen.

6. Steuervorrichtung (12) nach Anspruch 4 oder 5,
**dadurch gekennzeichnet, dass**
die Prozessoreinrichtung (CPU) dazu ausgelegt ist, von den Anlagenkomponenten (14, 16) jeweils Beschreibungsdaten (30), die zumindest einen in der Anlagenkomponente (14, 16) bereitgestellten Zielzustand (32, 34, 36, 38) und eine jeweilige für den bereitgestellten Zielzustand (32, 34, 36, 38) vorausgesetzte Pausenzeit beschreiben, über das Datennetzwerk (18), insbesondere mittels des PROFIenergy-Befehls "Query_Modes" (28), abzufragen und auf der Grundlage der Beschreibungsdaten (30) ein jeweiliges Zustandsmodel (22, 26) der Anlagenkomponente (14, 16) zu erzeugen.

7. Steuervorrichtung (12) nach Anspruch 6,
**dadurch gekennzeichnet, dass** die Prozessoreinrichtung (CPU) dazu ausgelegt ist, auf der Grundlage der Zustandsmodelle (22, 26) eine jeweilige einem Zielzustand (32, 34, 36, 38) eine vorausgesetzte Pausenzeit zuordnende Zuordnungsvorschrift zu erzeugen.

8. Steuervorrichtung (12) nach Anspruch 6 oder 7,
**dadurch gekennzeichnet, dass**
die Prozessoreinrichtung (CPU) dazu ausgelegt ist, die Zustandsmodelle (22, 26) auf der Grundlage von Abhängigkeitsdaten (46), welche zu zumindest einem bereitgestellten Zielzustand (32, 34, 36, 38) zumindest eines Zustandsmodells (22, 24) einen jeweiligen vorausgesetzten Betriebszustand (50) zumindest einer anderen Anlagenkomponente (14, 16) beschreiben, zu einem komponentenübergreifenden Gesamtmodell (24) zu verbinden.

9. Steuervorrichtung (12) nach Anspruch 8,
**dadurch gekennzeichnet, dass**
die Prozessoreinrichtung (CPU) dazu ausgelegt ist, auf der Grundlage des Gesamtmodells (24) für die Betriebspause eine einen Energieverbrauch der Automatisierungsanlage (10) minimierende Zustandskombination der Zielzustände (32, 34, 36, 38) der Anlagenkomponenten (14, 16) zu ermitteln.

10. Steuervorrichtung (12) nach Anspruch 8 oder 9,
**dadurch gekennzeichnet, dass**
eine Bedienschnittstelle (48) bereitgestellt ist, welche zum Empfangen der Abhängigkeitsdaten (46) von einem Benutzer der Automatisierungsanlage (10) ausgelegt ist.

11. Steuervorrichtung (12) nach einem der Ansprüche 8 bis 10,
**dadurch gekennzeichnet, dass**
die Prozessoreinrichtung (CPU) dazu ausgelegt ist, auf der Grundlage des Gesamtmodells (24) eine Schaltreihenfolge, in welcher die Anlagenkomponenten (14, 16) in einen jeweiligen festgelegten Zielzustand (32, 34, 36, 38) zu steuern und/oder wieder betriebsbereit zu schalten sind, zu ermitteln und in Abhängigkeit von der ermittelten Schaltreihenfolge die Pausenzeitdaten und/oder einen jeweiligen Weckbefehl zu erzeugen.

12. Steuervorrichtung (12) nach einem der Ansprüche 8 bis 11,
**dadurch gekennzeichnet, dass**
die Prozessoreinrichtung (CPU) dazu ausgelegt ist, einen jeweiligen aktuellen Betriebszustand (52) von den Anlagenkomponenten (14, 16) zu empfangen und jeweils in dem Gesamtmodell (24) als Ausgangszustand abzuspeichern und die Pausenzeitdaten in Abhängigkeit von den aktuellen Ausgangszuständen zu ermitteln.

13. Automatisierungsanlage (10) zum Durchführen eines Prozesses, aufweisend:
- mehrere Anlagenkomponenten (14, 16), die jeweils zum Steuern und/oder zum Beobachten zumindest eines Teils des Prozesses ausgelegt sind, und
- eine mit den Anlagenkomponenten (14, 16) über ein Datennetzwerk (18) gekoppelte Steuervorrichtung (12) zum Steuern der Anlagenkomponenten (14, 16),
**dadurch gekennzeichnet, dass**
die Steuervorrichtung (12) nach einem der Ansprüche 4 bis 12 ausgelegt ist und die Automatisierungsanlage (10) dazu ausgelegt ist, ein Verfahren nach einem der Ansprüche 1 bis 3 durchzuführen.

14. Automatisierungsanlage (10) nach Anspruch 13,
**dadurch gekennzeichnet, dass**
die Anlagenkomponenten (14, 16) jeweils durch ein PROFIenergy-Gerät gemäß dem PROFIenergy-Standard bereitgestellt sind.

## Claims

1. Method for operating an automation plant (10) in order to reduce a power consumption of plant components (14, 16) of the automation plant (10) for a production stoppage,
comprising the following steps:
- a control apparatus (12) transmits stoppage time data to the plant components (14, 16) via a data network (18) in order to initiate the production stoppage,
- each plant component (14, 16) automatically changes to a target state (32, 34, 36, 38) if the received stoppage time data specify a stoppage time expected for the target state (32, 34, 36, 38) and if at least one other plant component (14, 16) has a respective operating state (50) expected for the target state (32, 34, 36, 38),
- the control apparatus (12) transmits in each case one component-specific stoppage time (20) as the stoppage time data to the plant components (14, 16), which stoppage time is different than at least one stoppage time (20) transmitted to another of the plant components (14, 16),
**characterized by** the following steps:
- the control apparatus (12) defines a target state (38) for a first of the plant components (14) and determines the expected stoppage time and the respective expected operating state (50) of the at least one other plant component (16) for the defined target state (38),
- the control apparatus (12) controls the at least one other plant component (16) in the respective determined expected operating state (50),
- the control apparatus (12) transmits the determined expected stoppage time (20) to the first plant component (14), by means of which stoppage time the first plant component (14) changes to the defined target state (38).

2. Method according to Claim 1, **characterized by** the following step:
- in order to control the at least one other plant component (16) in the respective determined expected operating state (50), the control apparatus (12) sends a respective stoppage time (20) to the at least one other plant component (16), by means of which stoppage time the at least one other plant component (16) automatically changes to the respective determined expected operating state (50).

3. Method according to Claim 1 or 2,
**characterized in that**
at least the first plant component (14) consumes less power in its target state (38) than prior to the production stoppage.

4. Control apparatus (12) for controlling plant components (14, 16) of an automation plant (10) via a data network (18), said control apparatus comprising:
- a connection device (COM) for connecting the control apparatus (12) to the data network (18),
- a processor device (CPU), which is coupled to the connection device (COM) and is configured to transmit stoppage time data via the connection device (COM) into the data network (18) to the plant components (14, 16) in order to initiate a production stoppage of the automation plant (10),
wherein
the processor device (CPU) is configured to transmit a respective component-specific stoppage time (20) as the stoppage time data to the plant components (14, 16), which stoppage time is different than at least one stoppage time (20) transmitted to another of the plant components (14, 16), in order to initiate the production stoppage,
**characterized in that**
the processor device (CPU) is configured to define a target state (38) for a first of the plant components (14) and to determine the expected stoppage time and the respective expected operating state (50) of the at least one other plant component (16) for the defined target state (38),
- the processor device (CPU) is configured to control the at least one other plant component (16) in the respective determined expected operating state (50), and
- the processor device (CPU) is configured to transmit the determined expected stoppage time (20) to the first plant component (14), by means of which stoppage time the first plant component (14) changes to the defined target state (38).

5. Control apparatus (12) according to Claim 4,
**characterized in that**
the processor device (CPU) is configured to transmit the component-specific stoppage times (20) at different points in time and to define a wait period between the respective transmission of two stoppage times (20) depending on transition time data which specify a respective transition period (42) into the respective target state (32, 34, 36, 38) of the plant components (14, 16).

6. Control apparatus (12) according to Claim 4 or 5,
**characterized in that**
the processor device (CPU) is configured to call up from the plant components (14, 16) in each case descriptive data (30) which describe at least one target state (32, 34, 36, 38) provided in the plant component (14, 16) and a respective stoppage time expected for the provided target state (32, 34, 36, 38) via the data network (18), in particular by means of the PROFIenergy command "Query_Modes" (28) and to generate a respective state model (22, 26) of the plant component (14, 16) on the basis of the descriptive data (30).

7. Control apparatus (12) according to Claim 6,
**characterized in that** the processor device (CPU) is configured to generate a respective assignment rule assigning an expected stoppage time to a target state (32, 34, 36, 38) on the basis of the state models (22, 26).

8. Control apparatus (12) according to Claim 6 or 7,
**characterized in that**
the processor device (CPU) is configured to link the state models (22, 26) to a component-universal overall model (24) on the basis of dependence data (46) which describe a respective expected operating state (50) of at least one other plant component (14, 16) for at least one provided target state (32, 34, 36, 38) of at least one state model (22, 24).

9. Control apparatus (12) according to Claim 8,
**characterized in that**
the processor device (CPU) is configured to determine a state combination of the target states (32, 34, 36, 38) of the plant components (14, 16) which minimizes an energy consumption of the automation plant (10) on the basis of the overall model (24) for the production stoppage.

10. Control apparatus (12) according to Claim 8 or 9,
**characterized in that**
a user interface (48) is provided which is configured for receiving the dependence data (46) from a user of the automation plant (10).

11. Control apparatus (12) according to one of Claims 8 to 10,
**characterized in that**
the processor device (CPU) is configured to determine a switching sequence in which the plant components (14, 16) are to be controlled into a respective defined target state (32, 34, 36, 38) and/or are to be switched so as to be operation-ready again on the basis of the overall model (24) and to generate the stoppage time data and/or a respective wake command depending on the determined switching sequence.

12. Control apparatus (12) according to one of Claims 8 to 11,
**characterized in that**
the processor device (CPU) is configured to receive a respective present operating state (52) from the plant components (14, 16) and to store this in each case in the overall model (24) as initial state and to determine the stoppage time data depending on the present initial states.

13. Automation plant (10) for implementing a process, said automation plant comprising:
- a plurality of plant components (14, 16), which are each configured for controlling and/or monitoring at least part of the process, and
- a control apparatus (12), which is coupled to the plant components (14, 16) via a data network (18), for controlling the plant components (14, 16),
**characterized in that**
the control apparatus (12) is configured according to one of Claims 4 to 12 and the automation plant (10) is configured to implement a method according to one of Claims 1 to 3.

14. Automation plant (10) according to Claim 13,
**characterized in that**
the plant components (14, 16) are each provided by a PROFIenergy device in accordance with the PROFIenergy standard.

## Revendications

1. Procédé de fonctionnement d'une unité automatisée (10) destiné à réduire la consommation en puissance des composants de l'unité (14, 16) de l'unité automatisée (10) pour une pause dans le fonctionnement,
comprenant les étapes suivantes:
- un appareil de commande (12) envoie aux composants de l'unité (14, 16), pour introduire la pause dans le fonctionnement, par un réseau de données (18), des données de durée de pause,
- chaque composant de l'unité (14, 16) passe automatiquement dans un état ciblé (32, 34, 36, 38), si les données de durée de pause reçues indiquent une durée de pause requise pour l'état ciblé (32, 34, 36, 38) et si au moins un autre composant de l'unité (14, 16) présente un état de fonctionnement (50) requis respectif pour cet état ciblé (32, 34, 36, 38),
- l'appareil de commande (12) envoie comme données de durée de pause aux composants de l'unité (14, 16), à chacun une durée de pause spécifique aux composants (20), différente d'au moins une durée de pause (20) envoyée à un autre des composants de l'unité (14, 16),
**caractérisé par** les étapes suivantes:
- l'appareil de commande (12) fixe à un premier des composants de l'unité (14) un état ciblé (38) et détermine pour l'état ciblé (38) fixé la durée de pause requise et l'état de fonctionnement (50) requis respectif du au moins un autre composant de l'unité (16),
- l'appareil de commande (12) commande le au moins un autre composant de l'unité (16) dans l'état de fonctionnement (50) requis respectivement déterminé,
- l'appareil de commande (12) envoie au premier composant de l'unité (14) la durée de pause requise déterminée (20) par laquelle le premier composant de l'unité (14) passe dans l'état ciblé (38) fixé.

2. Procédé selon la revendication 1, **caractérisé par** l'étape: pour commander le au moins un autre composant de l'unité (16) dans l'état de fonctionnement (50) requis déterminé respectif, l'appareil de commande (12) envoie sur le au moins un autre composant de l'unité (16), une durée de pause (20) respective, par laquelle le au moins un autre composant de l'unité (16) passe automatiquement à l'état de fonctionnement (50) requis déterminé respectif.

3. Procédé selon la revendication 1 ou 2,
**caractérisé en ce que**
au moins le premier composant de l'unité (14), dans son état ciblé (38) consomme moins de puissance qu'avant la pause dans le fonctionnement.

4. Appareil de commande (12) destiné à commander des composants de l'unité (14, 16) d'une unité automatisée (10) par un réseau de données (18), présentant:
- un dispositif de raccordement (COM) pour raccorder l'appareil de commande (12) au réseau de données (18),
- un processeur (CPU) couplé au dispositif de raccordement (COM) réalisé, dans le but d'introduire une pause dans le fonctionnement de l'unité automatisée (10), pour envoyer des données de durée de pause par le dispositif de raccordement (COM) dans le réseau de données (18) aux composants de l'unité (14, 16),
le processeur (CPU) étant réalisé, dans le but d'introduire la pause sous forme de données de durée de pause aux composants de l'unité (14, 16), une durée de pause respective spécifique aux composants (20) qui est différente d'au moins une durée de pause (20) envoyée à un autre des composants de l'unité (14, 16),
**caractérisé en ce que**
- le processeur (CPU) est réalisé pour fixer pour un premier des composants de l'unité (14) un état ciblé (38) et à l'état ciblé (38) fixé, à déterminer la durée requise de pause et l'état de fonctionnement (50) requis respectif du au moins un autre composant de l'unité (16),
- le processeur (CPU) est réalisé pour commander au moins un autre composant de l'unité (16) dans l'état de fonctionnement (50) requis déterminé respectif, et
le processeur (CPU) est réalisé pour envoyer au premier composant de l'unité (14) la durée de pause requise déterminée (20) par laquelle le premier composant de l'unité (14) passe dans l'état ciblé (38) fixé.

5. Appareil de commande (12) selon la revendication 4, **caractérisé en ce que** le processeur (CPU) est réalisé pour envoyer les durées de pause (20) spécifiques aux composants à des moments différents et pour fixer une durée d'attente entre l'envoi respectif de deux durées de pause (20) en fonction de données de durée de transition, lesquelles indiquent une durée de transition (42) respective dans l'état ciblé respectif (32, 34, 36, 38) des composants de l'unité (14, 16).

6. Appareil de commande (12) selon la revendication 4 ou 5,
**caractérisé en ce que**
le processeur (CPU) est réalisé pour interroger, des composants de l'unité (14, 16), chacune des données descriptives (30), lesquelles décrivent au moins un état ciblé (32, 34, 36, 38) procuré dans le composant de l'unité (14, 16) et une durée de pause requise respective pour l'état ciblé (32, 34, 36, 38) procuré, par le biais du réseau de données (18), en particulier au moyen de la commande PROFIenergy, "Query_Modes" (28), et de produire, sur base des données descriptives (30), un modèle d'état (22, 26) respectif du composant de l'unité (14, 16).

7. Appareil de commande (12) selon la revendication 6,
**caractérisé en ce que** le processeur (CPU) est réalisé, sur base des modèles d'état (22, 26), pour produire une règle d'affectation respective affectant à un état ciblé (32, 34, 36, 38) une durée de pause requise.

8. Appareil de commande (12) selon la revendication 6 ou 7,
**caractérisé en ce que**
le processeur (CPU) est réalisé pour relier les modèles d'état (22, 26) à un modèle intégral (24) englobant les composants, sur base de données de dépendance (46), lesquelles décrivent au moins un état de fonctionnement (50) requis respectif d'au moins un autre composant de l'unité (14, 16) à au moins un état ciblé (32, 34, 36, 38) procuré d'au moins un modèle d'état (22, 24).

9. Appareil de commande (12) selon la revendication 8,
**caractérisé en ce que**
le processeur (CPU) est réalisé pour déterminer, sur base du modèle intégral (24) pour la pause dans le fonctionnement, une combinaison d'états des états ciblés (32, 34, 36, 38) des composants de l'unité (14, 16) réduisant au minimum la consommation d'énergie de l'unité automatisée (10).

10. Appareil de commande (12) selon la revendication 8 ou 9,
**caractérisé en ce que**
une interface de commande (48) est procurée, laquelle est réalisée pour la réception des données de dépendance (46) d'un utilisateur de l'unité automatisée (10).

11. Appareil de commande (12) selon l'une des revendications 8 à 10,
**caractérisé en ce que**,
le processeur (CPU) est réalisé pour déterminer, sur base du modèle intégral (24), une séquence de commutations dans laquelle les composants de l'unité (14, 16) sont à commander dans un état ciblé (32, 34, 36, 38) fixé respectif et/ou à commuter à nouveau en fonctionnement, et à produire, en fonction de la séquence de commutations déterminée, les données de durée de pause et/ou un ordre respectif d'éveil.

12. Appareil de commande (12) selon l'une des revendications 8 à 11, **caractérisé en ce que**,
le processeur (CPU) est réalisé pour recevoir un état de fonctionnement (52) à cet instant respectif des composants de l'unité (14, 16) et enregistrer respectivement dans le modèle intégral (24) comme état de sortie et pour déterminer les données de durée de pause en fonction des états de sortie à cet instant.

13. Unité automatisée (10) pour l'exécution d'un processus, présentant:
- plusieurs composants d'unité (14, 16) réalisés chacun pour la commande et/ou l'observation d'au moins une partie du processus, et
- un appareil de commande (12) couplé aux composants d'unité (14, 16) par un réseau de données (18) pour la commande des composants de l'unité (14, 16),
**caractérisée en ce que**
l'appareil de commande (12) est réalisé selon l'une des revendications 4 à 12 et l'unité automatisée (10) est réalisée pour exécuter un procédé selon l'une des revendications 1 à 3.

14. Unité automatisée (10) selon la revendication 13,
**caractérisée en ce que**
les composants de l'unité (14, 16) sont procurés chacun par un appareil PROFIenergy selon la norme PROFIenergy.
